# EUROPEAN PATENT SPECIFICATION

(11) **EP 1 941 124 B1**
(45) Date of publication and mention of the grant of the patent: **23.04.2014**
(21) Application number: 06779564.1
(22) Date of filing: 28.09.2006
(51) Int. Cl.: E21B 34/06, F16K 31/08, E21B 23/00, H01F 7/16

(54) **APPLICATIONS OF LOW POWER BISTABLE ACTUATORS DOWNHOLE**
ANWENDUNGEN VON LEISTUNGSARMEN BISTABILEN STELLGLIEDERN IM BOHRLOCH
Application d'actionneurs bistables basse énergie en fond de trou

(30) Priority: 29.09.2005 GB 0519783
(43) Date of publication of application: 09.07.2008
(73) Proprietor: Schlumberger Holdings Limited, Road Town, Tortola 1110 (VG); Schlumberger Oilfield Assistance Limited, Road Town, Tortola (VG); Services Pétroliers Schlumberger, 75007 Paris (FR); Schlumberger Technology B.V., 2514 JG The Hague (NL)
(72) Inventor: DOWNTON, Geoffrey, Gloucestershire GL6 9BY (GB)
(74) Representative: Ford, Michael Frederick
(86) International application number: PCT/GB2006/003602
(87) International publication number: WO 2007/036722

(56) References cited:
- WO-A-01/75343
- DE-A1- 3 730 381
- GB-A- 2 401 926
- GB-A- 2 408 757
- US-A- 3 503 022
- US-A- 3 842 860
- US-A- 4 295 795
- US-A- 4 580 761
- US-A1- 2004 025 949

## Description

This invention relates to an actuator, and in particular to an actuator suitable for use in a downhole environment, for example in a borehole for subsequent use in the extraction of oil or gas. The invention also relates to a drilling system including such an actuator.

GB 2 401 926 D1 discloses an electromagnetic actuator, said to be suitable for operating a valve, and having a stator defining two pairs of poles and an elongated magnetisable armature that is pivotable in a see-saw manner between two home positions. The armature is maintained in either home position by way of the magnetic flux generated by a low reluctance path between the stator and the armature when the armature is in contact with one of the stator poles while in a home position

There are a number of situations, in downhole applications, in which fluid flows from a source at relatively high pressure to a lower pressure source. By providing suitable valves, such flows of fluid can be controlled and/or harnessed for use in various applications. Actuators are required to enable control over such valves, and it is an object of the invention to provide an actuator suitable for use in such applications. The invention also relates to a valve controlled by such an actuator.

One application of this type is in a steerable drilling system. Steerable drilling systems for use in the formation of boreholes, for example for subsequent use in the extraction of oil or gas are well known. One form of steerable drilling system includes a bias unit comprising a housing upon which a plurality of bias pads are carried. Each pad is movable between a radially retracted position and a radially extended position in which it bears against the wall of the borehole. The pads are movable by pistons to which drilling fluid or mud can be ported through a valve arrangement including one or more valves as mentioned above. By moving the pads to their extended positions in turn in a manner synchronised with the rotation of the housing, in use, the engagement of the pads against the borehole wall applies a laterally directed reaction force to the housing in a substantially constant direction. It will be appreciated that a drill bit carried by the housing can be urged in a chosen direction using such a technique, thus achieving control over the drilling direction.

According to the present invention there is provided a downhole electro-hydraulic actuator arrangement for use in a drilling system as detailed in claim 1.

When the valve member is occupying one of its stable positions, the permanent magnet is conveniently held against movement by magnetic forces.

The valve member may be mechanically connected to the permanent magnet. Alternatively, an intermediate, movable magnet may be used to transmit movement to the valve. As a result, the actuator can be housed within a sealed housing.

Such an actuator is advantageous in that it consumes little or no power when the valve member occupies one of its stable positions, and relatively little power is consumed during switching. Fast switching may be achievable. Also, in such an arrangement, to switch between its stable conditions, the electromagnetic actuator needs only to be capable of overcoming the action of the fluid pressure acting against the relevant one of the first and second surfaces, rather than being capable of overcoming, for example, a magnetically or mechanically applied biasing load. Consequently, less power is consumed. Further, it may be possible to use an actuator of smaller size. A further advantage is that, by avoiding the use of a magnet, to hold the valve member in its stable positions, the collection of magnetic debris on and around the bi-stable actuator can be reduced.

The valve conveniently controls the flow of fluid from a source of fluid at relatively high pressure to a relatively low pressure source. The pressure differential between the high and low pressure sources may be derived from a range of sources. The flow of fluid controlled by the valve may be used in a range of applications, and may take a range of forms, for example drilling fluid or mud or oil. The invention encompasses the use of such an actuator and, where appropriate, associated valve in such applications.

The invention also relates to a bias unit comprising a housing having a plurality of bias pads carried thereby, each bias pad being movable by an associated piston, and a bi-stable actuator of the type described hereinbefore associated with each piston to control the supply of fluid under pressure thereto.

The invention will further be described by way of example, with reference to the accompanying drawings, in which:
Figure 1 is a sectional view illustrating an actuator and associated valve in accordance with one embodiment of the invention;
Figure 2 is an enlarged view illustrating the actuator of Figure 1;
Figure 3 is a diagrammatic view illustrating an alternative arrangement;
Figure 4 is a diagrammatic view illustrating part of a steerable drilling system; and
Figure 5 illustrates a bi-stable actuator used in the system of Figure 4.

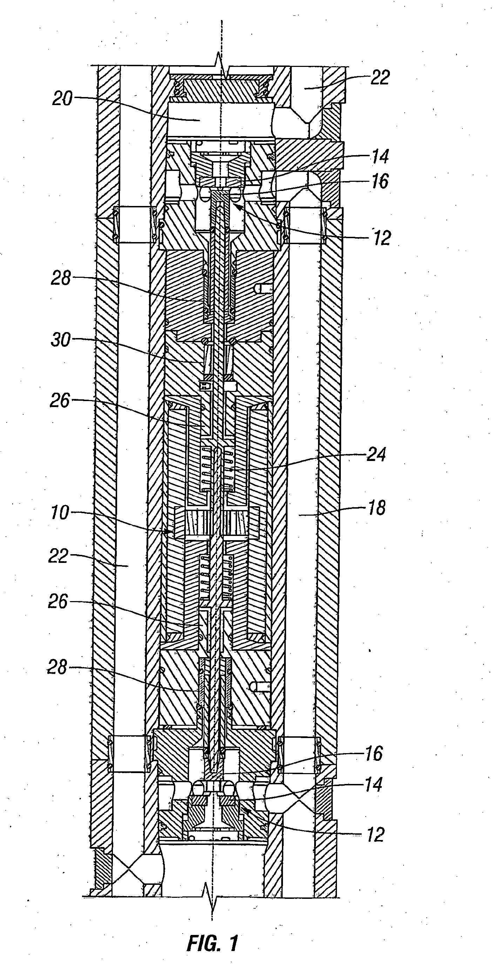

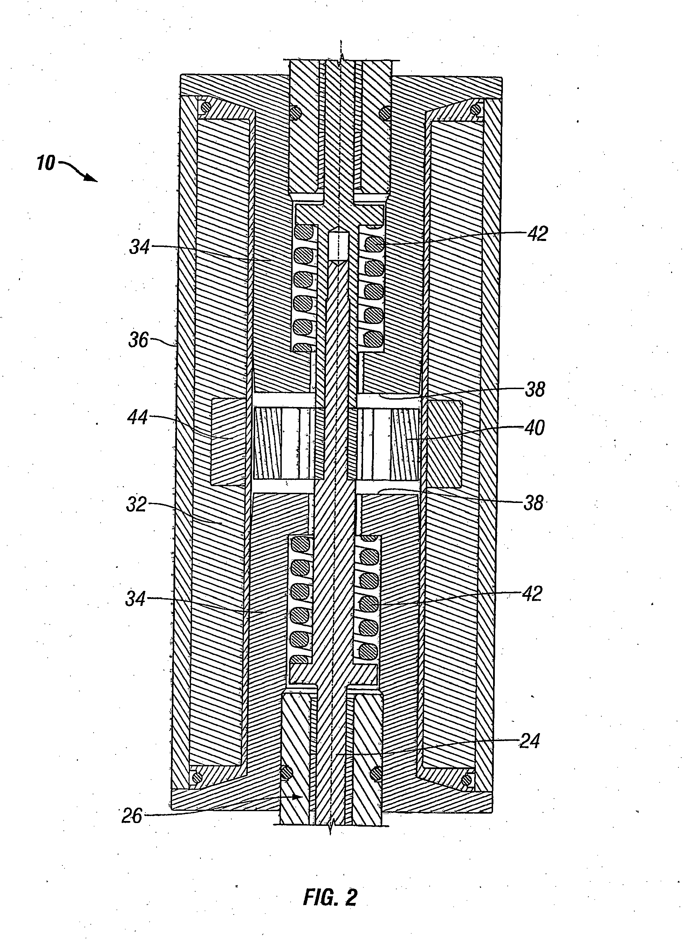

Referring firstly to Figures 1 and 2 there is illustrated a bi-stable actuator 10 operable to control the operation of a pair of valves 12. Each valve 12 comprises a seating element 14 against which a movable valve element 16 is engageable to control the supply of fluid from a relatively high pressure line 18 to a respective relatively low pressure chamber 20 which communicates, through suitable passages 22 with a relatively low pressure source or reservoir (not shown). In each valve 12, the valve element 16 is connected to a shaft 24 which is movable by the actuator 10 between a position in which the valve element 16 closes the valve 12 and a position in which the valve 12 is open. The shaft 24 is supported for sliding movement by bearings 26, and seal arrangements 28 are provided so as to prevent the flow of fluid from the valves 12 to the actuator 10 and/or the escape of lubricant from the actuator 10. It will be appreciated, therefore, that if the valves 12 are used in controlling the flow of, for example, a corrosive fluid, the actuator 10 is protected from the corrosive effects of such fluid. Further, oil or other lubricants used in the actuator 10 are prevented from escaping therefrom.

A sensor 30 is arranged to monitor the position of the shaft 24, and thereby provide a signal representative of the status of the valves 12.

In order to render the valves 12 of good wear resistance, the valve elements 16 and seating elements 14 are conveniently of polycrystalline diamond form.

However, this need not always be the case, depending upon the application in which the valves are used, and the invention encompasses the use of other designs of valve. Further, although a single actuator is shown as controlling two valves, the invention also applies to arrangements in which fewer valves are controlled using the actuator. The invention also encompasses arrangements in which the actuator has three or more stable positions.

Referring next to Figure 2, the actuator 10 comprises an actuator coil 32 encircling a pair of stator pieces 34 and located beneath or within a casing 36 of a magnetic material. The stator pieces 34 are,shaped to define stator faces 38 which face each other and are spaced apart from one another. Between the faces 38 of the stator pieces 34 is a chamber within which is located a movable permanent magnet 40, the magnet 40 being mounted upon the shaft 24 such that movement of the magnet 40 causes axial movement of the shaft 24.

The shaft 24 extends through openings formed in the stator pieces 34, and springs 42 engage between the stator pieces 34 and enlarged flanges formed on the shaft 24. As illustrated, the shaft 24 is conveniently manufactured in two-part form, the two parts being securable to one another by, for example, a screw-threaded connection.

A plurality of permanent magnets 44 are located around the space between the stator faces 38. The magnets 44 conveniently comprise Samarium Cobalt magnets, but other forms of permanent magnet could be used.

In use, energisation of the coil 32 results in the formation of a high strength magnetic field, the field strength of the magnetic field thus produced being sufficient to cause buckling of the magnetic field due to the permanent magnets 44. The buckling causes pole reversal to occur, resulting in an imbalance in the forces experienced by the movable magnet 40. The imbalance causes movement of the movable magnet 40 towards one of the stator faces 38, and thus causes axial movement of the shaft 24 to open one of the valves 12 and close the other of the valves 12.

Once such movement has occurred, the actuator 10 and valves 12 will remain in this position even after the actuator has been de-energised, the actuator 10 being held in this position by the repulsive magnetic forces between the magnets 44 and the movable magnet 40, these forces being sufficiently large to counter the opposing forces of the springs 42 and hydraulic effects due to the fluid pressures at the valves 12.

Movement of the actuator 10 to its opposite stable position is achieved by oppositely energising the coil 32, and once in that position, the actuator 10 will stay in that position even after de-energising the coil 32.

It will be appreciated that the actuator is shown at an intermediate position between its stable positions.

The actuator 10 and valves 12 can start and stop the flow of fluid through a port of diameter less than 10 mm with a pressure differential of less than 14662 kg/cm² (5000 psi) using less than 1 Joule of electrical energy. When in one of its stable conditions, less than 0.001 Joule is expended. Switching can be achieved in less than 40 ms.

The actuator 10 may be configured such that, during switching, once movement of the movable magnet 40 has commenced and the magnet has moved beyond a predetermined position, the continued movement of the magnet 40 is used, in conjunction with the coil 32, to generate electricity. This can be achieved by configuring the coil 32 and associated drive circuitry to apply a braking load to the magnet 40 during this phase of the magnets movement. It is envisaged that at least 0.001 Joule of energy can be extracted in this manner. Further, the reduced velocity at which the magnet 40 reaches its stable position may reduce damage or wear of the valve and/or actuator. Such an arrangement may allow the springs 42 which also serve to cushion such movement to be omitted.

Although the actuator is held in its stable positions by magnetic forces, it could alternatively or additionally be held in its stable positions by hydraulic pressure applied forces, for example the forces applied to the shaft 24 and valve elements 16.

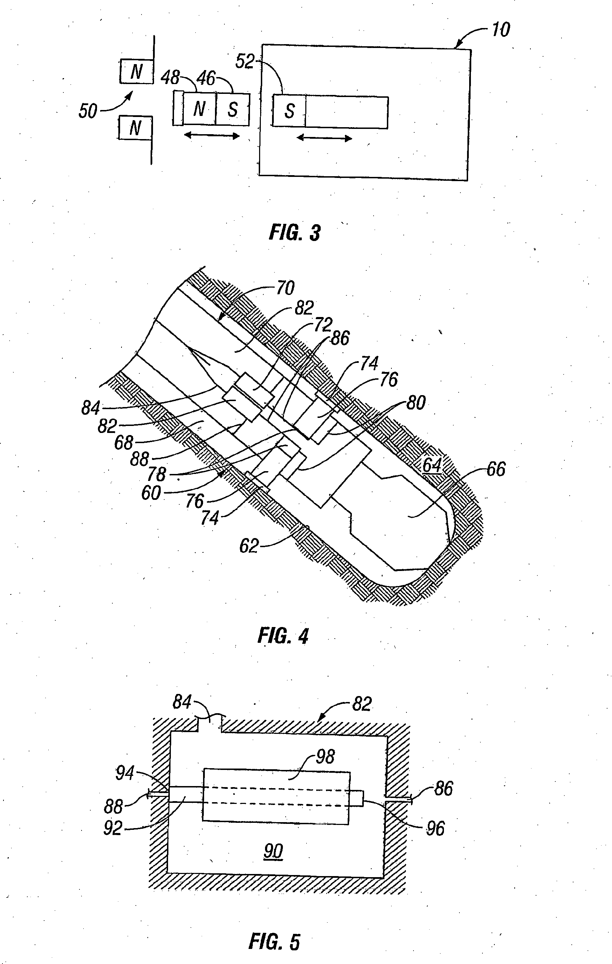

In the arrangement illustrated, the volume or chamber in which the magnet 40 is located is conveniently oil filled. To reduce interference to the movement of the magnet 40, flow channels are conveniently provided therein (as illustrated) to allow oil to flow from one side of the magnet 40 to the other side thereof, in use. As mentioned hereinbefore, seals 28 are provided to avoid loss of oil, or mixing of the fluid controlled by the valves 12 with the oil. These seals are shown as comprising reciprocating or sliding seals. However, diaphragm arrangements could be used to achieve this effect, if desired. A further possibility is illustrated diagrammatically in Figure 3.

In the arrangement shown in Figure 3, the actuator 10 is housed in a sealed housing, operation of the actuator 10 being used to vary the magnetic field outside of the housing. This is achieved by using the actuator 10 to control the position occupied by a magnet 52, for example by having the magnet 52 mounted upon the shaft 24.

Located externally of the housing is a further magnet 46. The magnets 52, 46 are arranged to repel one another. A valve member 48 is carried by the magnet 46, the valve member 48 being engageable with a seating 50 which is magnetic and arranged to repel the magnet 46. In use, movement of the magnet 52 to the left under the control of the actuator 10 urges the valve member 48 into engagement with the seating against the repulsive magnetic force between the seating 50 and the magnet 48. Movement of the magnet 52 to the right results in a reduction of the force holding the valve member 48 against its seating 50, and the repulsion between the magnet 40 and the seating 50 urges the valve member 48 away from its seating 50.

Figure 4 illustrates, in part, a steerable drilling system 60 for use in the formation of a borehole 62 in a subsurface formation 64. The steerable drilling system comprises a drill bit 66 arranged to be rotated whilst a load is applied thereto to abrade, gouge or otherwise remove material from the formation 64 to extend the borehole 62. The formation material removed by the bit 66 is washed away using drilling fluid, supplied through a drill string, the drilling fluid returning to the surface through an annulus 68 defined between the drill string and the wall of the borehole 62. The drill bit 66 may be rotated by, for example, a fluid driven motor located within the borehole 62. Alternatively, the drill bit 66 may be rotated by a motor located at the surface, the rotary motion being transmitted to the drill bit 66 from the surface through the drill string.

The drill string incorporates a number of components, for example stabilisers to assist in maintaining the drill string in the desired location and to allow the application of the necessary load to the drill bit 66, and instrumentation for example to determine the orientation of the drill bit 66 and the direction in which drilling is occurring.

One of the drill string components is a bias unit 70 illustrated in part in Figure 4. The bias unit 70 comprises a housing 72 upon which a plurality of bias pads 74 are carried. The bias pads 74 are each movable between respective radially retracted positions and radially extended positions. Movement of the bias pads 74 between these positions is achieved by means of associated pistons 76 reciprocable within corresponding cylinders 78. It will be appreciated that when the respective cylinders 78 are supplied with fluid under pressure, the pistons 76 are forced outwardly pushing the associated bias pads 74 into engagement with the wall of the borehole 62, and the resultant reaction force experienced by the housing 72 results in a laterally directed force being applied to the drill bit 66 which is connected to the housing 72. When fluid under pressure is not supplied to the cylinders 78, the co-operation between the bias pads 74 and the wall of the borehole 62 will force the associated pistons 76 back towards their retracted positions, fluid escaping from the cylinders 78 to the annulus 68 via restricted flow paths 80. Although the restricted flow paths 80 are illustrated diagrammatically as forming part of the housing 74, it will be appreciated that these flow paths may be achieved in a number of ways. For example, the flow paths may be defined by small clearances between the pistons 76 and associated cylinders 78 or may be defined by passages formed in the pistons 76.

Typically, a rotary face sealing valve has been used to control the supply of fluid under pressure to the cylinders 78. In accordance with the invention, rather than using a rotary face sealing valve to achieve this function, a plurality of bi-stable actuators are used, each actuator 82 being associated with a respective one of the pistons 76 and associated cylinders 78. The actuators 82 are controlled so as to control the position occupied by each piston 76 and the bias pad 74 associated therewith at any given time. It will be appreciated that by controlling the positions occupied by the bias pads 74 in a relationship synchronised with the rotation of the housing 72, the steerable drilling system 60 can be operated in such a manner that a laterally directed force acting in a substantially uniform direction can be applied to the drill bit 66 urging the drill bit 66 to form a curve or dog leg in the borehole 62.

As illustrated in Figure 5, each actuator 82 includes an inlet 84 to which drilling fluid under pressure is supplied from the drill string. Each actuator 82 further includes a first outlet 86 which communicates with the cylinder 78 of the piston and cylinder 76, 78 with which the valve 82 is associated. A second outlet 88 of the actuator 82 communicates with the annulus 68 through a restricted flow passage. The inlet 84 and first and second outlets 86, 88 all communicate with a chamber 90 formed in the actuator 82. Located within the chamber 90 is a valve member 92, the valve member 92 being guided for reciprocating movement between a first position in which the valve member 92 engages a seating associated with the first outlet 86, closing the first outlet 86, fluid being able to flow from the inlet 84 to the chamber 90 and through the second outlet 88 with the valve member 92 in this position and a second position in which the valve member 92 engages a seating associated with the second outlet 88, closing the second outlet 88 whilst permitting fluid to flow from the inlet 84 through the chamber 90 to the first outlet 86. Figure 5 illustrates the actuator with the valve member 92 in its second position. The valve member 92 has a first surface 94 against which the fluid pressure within the chamber 90 acts when the valve member 92 is in its first position, the fluid pressure applying a force to the valve member 92 holding it in its first position. Similarly, the valve member 92 includes a second surface 96 orientated such that when the valve member 92 occupies its second position, the action of the fluid under pressure within chamber 92 on the second surface 96 resists movement of the valve member 92 away from its second position. An electromagnetic actuator arrangement 98 is provided to drive the valve member 92 between its first and second positions, for example by appropriately controlling the magnetic field applied to an armature or permanent magnet carried by the valve member 92.

With the valve member 92 in the position illustrated in Figure 5, it will be appreciated that fluid under pressure is applied to the first outlet 86, thus the cylinder 78 with which the actuator 82 is associated is supplied with fluid under pressure urging the respective piston 76 and bias pad 74 towards its extended position and thus resulting in the application of a laterally directed force to the drill bit 66. As fluid is only able to escape from the cylinder 76 at a restricted rate through the restricted passage 80, it will be appreciated that only a relatively small quantity of fluid will flow through the actuator 82 to the cylinder 78, and that the fluid pressure within the chamber 90 will very rapidly rise resulting in a relatively large magnitude force being applied via the second surface 96 to the valve member 92 thus ensuring that the valve member 92 will not move from the position illustrated.

When it is desired to allow the associated piston 76 and bias pad 74 to move towards its retracted position, the electromagnetic actuator arrangement 98 is operated to apply a force to the valve member 92 to cause the valve member 92 to move towards its first position. It will be appreciated that in order to do this, the actuator 98 must be able to apply a sufficiently large force to overcome the hydrostatic force applied via the second surface 96. However once movement of the valve member 92 has commenced, it will be appreciated that this force will rapidly diminish as both the first and second surfaces of the valve member are exposed to the fluid pressure and so for the majority of the movement of the valve member 92, the load against which the electromagnetic actuator 98 must act is relatively low. Once the electromagnetic actuator 98 has moved the valve member 92 to its first position, it will be appreciated that the valve member 92 closes the first outlet 86 and instead communication is established between the chamber 90 and the second outlet 88. As communication is broken between the chamber 90 and the first outlet 86, it will be appreciated that the fluid pressure within the associated cylinder 78 will fall, fluid escaping through the restricted flow passage 80, thus enabling the piston 76 and bias pad 74 to return to their retracted conditions. As illustrated in Figure 4, the second outlet 88 forms a restricted flow path to the annulus 68. As the flow of fluid to the annulus 68 is restricted, it will be appreciated the fluid pressure within the chamber 90 will rapidly rise, the fluid pressure acting upon the first surface 94 of the valve member 92 thus applying a relatively large magnitude force to the valve member 92 holding the valve member 92 in its first position.

As the valve member 92 is held in both its first and second stable positions by means of the applied fluid pressure, it will be appreciated that the electromagnetic actuator 98 does not need to be energised other than when it is desired to move the valve member 92 between its first and second positions. Clearly, this can result in a reduction in the power consumed by the bias unit 70. Further, compared to bi-stable actuators of the type in which a magnetically applied or mechanically applied biasing force acts upon the valve member, the load against which the electromagnetic actuator 98 must act in order to move the valve member 92 between its first and second positions is relatively low thus achieving further savings in the power consumption of the bias unit 70. It may also be possible to use an actuator 98 of smaller dimensions.

As discussed hereinbefore, each time the actuator 84 is switched between its stable positions, the chamber 90 will experience a reduction in fluid pressure and will subsequently be re-pressurised, a quantity of fluid passing through the actuator 84 during each actuation. This quantity will be relatively small.

Compared to arrangements using bi-stable actuators of the type in which a permanent magnet is used to apply a biasing or latching force, the arrangement described hereinbefore is advantageous in that the absence of the provision of a permanent magnet reduces the risk of magnetic debris tending to collect around or in the actuator. Consequently, maintenance and servicing operations may be reduced.

The actuator and associated valves of any of the arrangements described hereinbefore may be used in controlling the flow of a range of fluids from a relatively high pressure source to a relatively low pressure source. In applications in which the fluid is drilling fluid or mud, the pressure differential between the high and low pressure sources may be derived from the difference in pressure between the interior of the drilling collar and the annulus between the collar and the wall of the borehole. Alternatively it may be due to the choking effects of obstructions to fluid flow along and within the collar, the occurrence of explosions or perforations, the movement of a piston or other object in the fluid flow, the operation of a pump or motor, or the occurrence of transient pressure waves, for example as generated by a mud pulse telemetry system. A number of other causes of a pressure differential may be used. For example, the pressure differential could be derived from pore pressure above or below the pressure in the annulus, a pressure differential across the mud cake in a well, the pressure differential across and/or along and/or around the casing, the pressure differential due to turbulence or due to sudden changes in flow direction. Although many of these examples relate to the pressure of drilling fluid or mud, the invention may also be used with other fluids, including gases or mixtures of liquids and gases. It may also apply to the fluid-like motion of particles in a downhole environment.

The flow of fluid controlled using the actuator and valve arrangement may be used in a number of applications. For example, it could be used to displace a piston and thereby exert a force or impact upon another body, for example for the purposes of steering during the formation of a borehole. Alternatively, the piston could exert a force or impact upon a fluid or a magnetic field. Rather than use the exerted force in steering during the formation of a borehole, it could be used to generate electrical or hydraulic power or to create a sonic output to be detected by other sensors so as to allow the transmission of data. If combined with a compliant restraint or fluid, the piston could form a resonant cavity for use in the generation of pressure waves which could be transmitted to the surface to allow communication from downhole equipment to the surface.

Another application of the actuator and valve is in controlling the inflation and/or deflation of a bladder, for example a packer device, to expose or seal a channel. Another possible use of the actuator and valve arrangement is to control the driving of a positive displacement motor, for example a mud motor, or to control the driving of a turbine.

The actuator and valve arrangement could alternatively be used to control the injection of fluid between two sliding or static surfaces to allow control over the lubrication therebetween, to control the creation of turbulence in an otherwise steady flow of fluid for the purposes of changing the pressure across and along the fluid flow. Another possibility is to control the flow direction of fluid across a plurality of channels so that the flow preferentially attaches to one of a number or surfaces so as to form a fluid flip-flop arrangement.

Other possible uses of the valve and actuator arrangement include controlling the flow of formation fluid into a chamber to allow evaluation thereof or to control the flow of fluid into the formation. Alternatively, the valve and actuator arrangement could be used to control the flow of one or more chemicals into or from a chamber for the purposes of mixing with one or more other substances.

The flow of fluid controlled by the actuator and valve arrangement could be used to propel an object along a channel, for example to fire an object towards a target or to drive sample into a suitable receptacle. Alternatively, it could be used to rotate a shaft, for example to change the orientation of a body attached to the shaft. It will be appreciated that such an arrangement could be used to activate a lever, rotate or otherwise move a sensor or package, rotate a bolt or to latch or unlatch two or more bodies

The actuator and valve arrangement could be used to control the displacement, speed and acceleration of a body whose motion is impeded by the compressibility of the fluid located in front of the body, for example by controlling the rate at which fluid is allowed to flow from a position in front of the body to a position behind it.

Further possible uses for the valve and actuator arrangement include the generation of a water hammer effect in a channel, for example for the purposes of communication with the surface, or to control the movement of a piston such that a pressure wave is generated, for example for the purposes of communication, or to control the opening and closure of a larger valve. This could be achieved by rotation or translational movement, or a combination of these movements, and may be used to control fluid flow in, for example, the drill string. This, again, could be used in the transmission of data or signals.

The flow of fluid controlled by the valve and actuator arrangement could alternatively be used in the movement of a piston connected to a drilling head to control the repeated impact of the drilling head against the formation to be drilled, to change the shape of a bit to control the drilling direction by altering the position of cutters located on the bit as the bit rotates, or to control bit whirl and vibration, again by controlling the positions of cutters during rotation of the bit. Other possibilities include controlling the movement of a piston that pushes directly or indirectly on the wall of the formation in order to control drilling direction. The piston may be held against rotation, for example by a non-rotating sleeve, or could rotate in use. A further possibility includes using the valve and actuator arrangement to control the movement of a piston upon which magnets are located, the piston being movable relative to coils such that movement of the piston and associated magnets past the coils results in the generation of electricity. By driving the piston so as to cause it to reciprocate, for example using two valves, a substantially continuous supply of electricity may be generated.

Further possible uses for the actuator and valve arrangement include using the valve and actuator arrangement to control the position occupied by a piston movable to cause two relatively moving surfaces to lock together or to change the frictional forces between the moving surfaces and thereby adjust or control their relative speeds. This technique could be used to lock a tool against rotation relative to the formation or casing or to control the amount of slip between the tool and the formation or casing, or to lock or control the degree of slipping between a rotatable or sliding sleeve and a tool.

The valve and actuator arrangement could alternatively be used to relieve the pressure differential between two chambers for example where a passive mechanical valve or other means is not suitable for use.

The bi-stable nature of the valve and actuator arrangement lends itself to binary operation, and so it may be suitable for use in fluid logic circuits, for example controlling one or more operations.

Another possible use for the valve and actuator arrangement is in controlling the flow of fluid to control the impact of the fluid against the formation to vary the hydraulic horsepower exposed. Alternatively, it may be used to stop fluid flow through a passage, for example to cease operation of a fluid operated downhole tool.

Another possible use for the valve and actuator arrangement is to use the flow of fluid controlled by the actuator and valve to rupture a chamber, diaphragm or seal, for example to provide an automatic fail-safe device. Alternatively, the bi-stable actuator and valve arrangement could be used to adjust the damping of, for example, a dashpot device, for example by modulating the flow of fluid through an annulus or along a passage. It will be appreciated, therefore, that an active thrust dampener may be provided.

The fluid flow controlled using the actuator and valve arrangement could be used to control the force applied by and/or extension of a piston used to apply load to a bit whilst drilling. As a result, drilling efficiency may be improved. The use of two or more bi-stable actuators and associated pistons could increase the range of directions in which the bit may be urged, and may thereby assist in directional drilling as well as improving drilling efficiency.

The bi-stable actuator and valve arrangement may be used to apply cyclic axial loads to a bit, during drilling, through a suitable linear thrust device. Such an arrangement would have an asymmetric cutting ability which can be controlled in phase with the rotation of the bit.

Another use for the actuator and valve arrangement is in controlling the operating parameters of a constant velocity transmission or to shift between two or more gear ratio setting in an automatic gear box located in a downhole environment. The adjustment in drive ratio achievable in this manner may give rise to improved drilling efficiency.

Another possible use for the actuator and valve arrangement is in controlling the operation of shears to cut another body, for example to shear through a cable or shaft.

The flow of fluid controlled by the actuator and valve arrangement used in one application may be used to move, for example, a servo arrangement or piston such that a relatively small amount of fluid through the valve may be used to control a greater flow of fluid.

The flow of fluid controlled by the actuator and valve arrangement may be frequency modulated to control any of the effects mentioned hereinbefore.

Whilst a large number of possible sources of pressure differentials and possible uses of the pressure differentials are described hereinbefore, the invention is not restricted to the specific arrangements, and may find application in a number of other scenarios.

## Claims

1. A downhole electro-hydraulic actuator arrangement for use in a drilling system, the actuator arrangement defining:
a plurality of chambers (90), each chamber having a fluid inlet (84) for connection to a source of hydraulic fluid, a first fluid outlet (86) for supplying the hydraulic fluid under pressure to a rotary steerable drilling system, and a second outlet (88) for relieving the pressure in the chamber;
a plurality of valve members (92; or 16, 24), each valve member being linearly movable between a first position in which it cooperates with a first seat (14) to close the first fluid outlet (86) and a second position in which it cooperates with a second seat (14) to close the second fluid outlet (88) of a corresponding chamber (90); and
a plurality of electromagnetic devices, each electromagnetic device cooperating with a corresponding valve member and comprising a permanent magnet (40) linearly movable under the influence of a magnetic field generated, in use, by an electrical circuit (32), the permanent magnet having first and second stable positions which it can occupy when the electrical circuit is not energized and being operable when energized to drive the valve member between its first and second positions;
wherein each valve member, of the plurality of valve members, having a first surface (94) against which the fluid pressure within the chamber acts when the valve member is in its first position to resist movement of the valve member from its first position, and a second surface (96) against which the fluid pressure within the chamber acts when the valve member is in its second position to resist movement of the valve member from it second position, the plurality of valve members being selectively actuated to control corresponding pistons (76) coupled to bias pads (74) of a rotary steerable drilling system (60.

2. The actuator arrangement of claim 1, wherein the valve member (92; or 16, 24) is mechanically connected to the permanent magnet (40).

3. The actuator arrangement of claim 1, wherein an intermediate movable magnet (46) is provided and used to transmit movement to the valve member.

4. The actuator arrangement of claim 1 or claim 2, wherein when the valve member (92; or 16, 24) is occupying one of its stable positions, the permanent magnet (40) is held against movement by magnetic forces.

5. The actuator arrangement of any preceding claim, configured such that after the permanent magnet (40) has moved beyond a predetermined position, further movement thereof is used to generate electricity.

6. The actuator arrangement of any preceding claim, wherein the permanent magnet (40) is mounted on a shaft (24) for guided movement relative to a housing, and seal means (28) are provided around said shaft to restrict fluid leakage therealong.

7. The actuator arrangement of claim 6, wherein the seal means (28) comprises at least one reciprocating seal, sliding seal, elastomeric extending seal or diaphragm arrangement.

8. A drilling system incorporating an actuator arrangement in accordance with any one of the claims 1 to 7, wherein an actuator is used to control the movement of a piston connected to a drilling head to control the repeated impact of the drilling head against the formation to be drilled, to change the shape of a bit to control the drilling direction by altering the position of cutters located on the bit as the bit rotates, to control bit whirl and vibration, again by controlling the position of cutters during rotation of the bit, to control the movement of a piston that pushes directly or indirectly on the wall of the formation in order to control drilling direction, to control the movement of a piston upon which magnets are located, the piston being movable relative to coils such that movement of the piston and associated magnets past the coils results in the generation of electricity, or to control the position occupied by a piston movable to cause two relatively moving surfaces to lock together or to change the frictional forces between the moving surfaces and thereby adjust or control their relative speeds.

## Patentansprüche

1. Elektrohydraulische Bohrloch-Aktoranordnung für die Verwendung in einem Bohrsystem, wobei die Aktoranordnung definiert:
mehrere Kammern (90), wobei jede Kammer einen Fluideinlass (84) für die Verbindung mit einer Hydraulikfluidquelle, einen ersten Fluidauslass (86) zum Liefern des Hydraulikfluids unter Druck zu einem Lenk-Drehbohrsystem und einen zweiten Auslass (88) zum Entlasten des Drucks in der Kammer besitzt;
mehrere Ventilelemente (92; oder 16, 24), wobei jedes Ventilelement zwischen einer ersten Position, in der es mit einem ersten Sitz (14) zusammenwirkt, um den ersten Fluidauslass (86) zu schließen, und einer zweiten Position, in der es mit einem zweiten Sitz (14) zusammenwirkt, um den zweiten Fluidauslass (88) einer entsprechenden Kammer (90) zu schließen, geradlinig beweglich ist; und
mehrere elektromagnetische Vorrichtungen, wobei jede elektromagnetische Vorrichtung mit einem entsprechenden Ventilelement zusammenwirkt und einen Permanentmagneten (40), der unter dem Einfluss eines Magnetfeldes, das im Gebrauch durch eine elektrische Schaltung (32) erzeugt wird, geradlinig beweglich ist, enthält, wobei der Permanentmagnet eine erste und eine zweite stabile Position besitzt, die er einnehmen kann, wenn die elektrische Schaltung nicht erregt ist, und der, wenn er erregt wird, betreibbar ist, um das Ventilelement zwischen seiner ersten und seiner zweiten Position anzutreiben;
wobei jedes Ventilelement der mehreren Ventilelemente eine erste Oberfläche (94), gegen die der Fluiddruck in der Kammer wirkt, wenn das Ventilelement in seiner ersten Position ist, um der Bewegung des Ventilelements aus seiner ersten Position zu widerstehen, und eine zweite Oberfläche (96), gegen die der Fluiddruck in der Kammer wirkt, wenn das Ventilelement in seiner zweiten Position ist, um der Bewegung des Ventilelements aus seiner zweiten Position entgegenzuwirken, aufweist, wobei die mehreren Ventilelemente wahlweise betätigt werden, um entsprechende Kolben (76), die mit Vorbelastungskissen (74) eines Lenk-Drehbohrsystems (60) gekoppelt sind, zu steuern.

2. Aktoranordnung nach Anspruch 1, wobei das Ventilelement (92; oder 16, 24) mit dem Permanentmagneten (40) mechanisch verbunden ist.

3. Aktoranordnung nach Anspruch 1, wobei ein beweglicher Zwischenmagnet (46) vorgesehen ist, der verwendet wird, um Bewegung an das Ventilelement zu übertragen.

4. Aktoranordnung nach Anspruch 1 oder Anspruch 2, wobei der Permanentmagnet (40) dann, wenn das Ventilelement (92; oder 16, 24) eine seiner stabilen Positionen einnimmt, gegen eine Bewegung durch magnetische Kräfte festgehalten wird.

5. Aktoranordnung nach einem vorhergehenden Anspruch, die in der Weise konfiguriert ist, dass dann, wenn der Permanentmagnet (40) über eine vorgegebene Position hinaus bewegt worden ist, eine weitere Bewegung hiervon verwendet wird, um Elektrizität zu erzeugen.

6. Aktoranordnung nach einem vorhergehenden Anspruch, wobei der Permanentmagnet (40) an einer Welle (24) montiert ist, die relativ zu einem Gehäuse geführt bewegt wird, und Dichtungsmittel (28) um die Welle vorgesehen sind, um längs der Welle ein Entweichen von Fluid zu begrenzen.

7. Aktoranordnung nach Anspruch 6, wobei die Dichtungsmittel (28) eine hin und her bewegliche Dichtung und/oder eine Gleitdichtung und/oder eine sich ausdehnende Elastomerdichtung und/oder eine Membrananordnung umfassen.

8. Bohrsystem, das eine Aktoranordnung nach einem der Ansprüche 1 bis 7 enthält, wobei ein Aktor verwendet wird, um die Bewegung eines mit einem Bohrkopf verbundenen Kolbens zu steuern, um das wiederholte Aufschlagen des Bohrkopfes auf der zu bohrenden Formation zu steuern, um die Form einer Krone zu ändern, um die Bohrrichtung durch Verändern der Position von Schneideinrichtungen, die sich an der Bohrkrone befinden, zu steuern, wenn sich die Bohrkrone dreht, um einen Bohrkronenwirbel und eine Bohrkronenvibration erneut durch Steuern der Position der Schneideinrichtungen während der Drehung der Bohrkrone zu steuern, um die Bewegung eines Kolbens, der direkt oder indirekt gegen die Wand der Formation schiebt, um die Bohrrichtung zu steuern, zu steuern, um die Bewegung eines Kolbens, an dem sich Magneten befinden, zu steuern, wobei der Kolben relativ zu Spulen beweglich ist, derart, dass eine Bewegung des Kolbens und der zugeordneten Magneten vorbei an den Spulen die Erzeugung von Elektrizität zur Folge hat, oder um die Position, die von einem beweglichen Kolben eingenommen wird, zu steuern, um zwei sich relativ bewegende Oberflächen dazu zu veranlassen, miteinander zu verriegeln, oder um die Reibungskräfte zwischen den sich bewegenden Oberflächen zu verändern, um dadurch ihre Relativgeschwindigkeiten einzustellen oder zu steuern.

## Revendications

1. Agencement d'actionneur électrohydraulique de fond de trou pour une utilisation dans un système de forage, l'agencement d'actionneur définissant :
une pluralité de chambres (90), chaque chambre comportant une entrée de fluide (84) pour un raccordement à une source de fluide hydraulique, une première sortie de fluide (86) pour fournir le fluide hydraulique sous pression à un système de forage orientable rotatif, et une deuxième sortie (88) pour relâcher la pression dans la chambre ;
une pluralité d'éléments de vanne (92 ; ou 16, 24), chaque élément de vanne pouvant être déplacé linéairement entre une première position à laquelle il coopère avec un premier siège (14) pour fermer la première sortie de fluide (86) et une deuxième position à laquelle il coopère avec un deuxième siège (14) pour fermer la deuxième sortie de fluide (88) d'une chambre (90) correspondante ; et
une pluralité de dispositifs électromagnétiques, chaque dispositif électromagnétique coopérant avec un élément de vanne correspondant et comprenant un aimant permanent (40) pouvant être déplacé linéairement sous l'influence d'un champ magnétique généré, en utilisation, par un circuit électrique (32), l'aimant permanent ayant des première et deuxième positions stables qu'il peut occuper lorsque le circuit électrique n'est pas alimenté et pouvant fonctionner lorsqu'il est alimenté pour entraîner l'élément de vanne entre ses première et deuxième positions ;
dans lequel chaque élément de vanne, de la pluralité d'éléments de vanne, comporte une première surface (94) contre laquelle la pression de fluide dans la chambre agit lorsque l'élément de vanne est à sa première position pour résister à un déplacement de l'élément de vanne à partir de sa première position, et une deuxième surface (96) contre laquelle la pression de fluide dans la chambre agit lorsque l'élément de vanne est à sa deuxième position pour résister à un déplacement de l'élément de vanne à partir de sa deuxième position, la pluralité d'éléments de vanne étant actionnés de manière sélective pour commander des pistons (76) correspondants accouplés à des patins de sollicitation (74) d'un système de forage orientable rotatif (60).

2. Agencement d'actionneur selon la revendication 1, dans lequel l'élément de vanne (92 ; ou 16, 24) est relié mécaniquement à l'aimant permanent (40).

3. Agencement d'actionneur selon la revendication 1, dans lequel un aimant mobile intermédiaire (46) est prévu et utilisé pour transmettre un déplacement à l'élément de vanne.

4. Agencement d'actionneur selon la revendication 1 ou la revendication 2, dans lequel, lorsque l'élément de vanne (92 ; ou 16, 24) occupe l'une de ses positions stables, l'aimant permanent (40) est maintenu contre un déplacement par des forces magnétiques.

5. Agencement d'actionneur selon l'une quelconque des revendications précédentes, configuré de sorte que, après que l'aimant permanent (40) a été déplacé au-delà d'une position prédéterminée, un déplacement supplémentaire de celui-ci est utilisé pour générer de l'électricité.

6. Agencement d'actionneur selon l'une quelconque des revendications précédentes, dans lequel l'aimant permanent (40) est monté sur un arbre (24) pour un déplacement guidé par rapport à un logement, et des moyens formant joint (28) sont prévus autour dudit arbre pour limiter une fuite de fluide le long de celui-ci.

7. Agencement d'actionneur selon la revendication 6, dans lequel les moyens formant joint (28) comprennent au moins un agencement de joint se déplaçant en va-et-vient, de joint coulissant, de joint extensible élastomérique ou de membrane.

8. Système de forage incorporant un agencement d'actionneur selon l'une quelconque des revendications 1 à 7, dans lequel un actionneur est utilisé pour commander le déplacement d'un piston relié à une tête de forage pour commander l'impact répété de la tête de forage contre la formation à forer, pour changer la forme d'un trépan pour commander la direction de forage en modifiant la position des éléments de coupe situés sur le trépan alors que le trépan tourne, pour commander le tournoiement et la vibration du trépan, de nouveau en commandant la position des éléments de coupe pendant la rotation du trépan, pour commander le déplacement d'un piston qui pousse directement ou indirectement sur la paroi de la formation afin de commander la direction de forage, pour commander le déplacement d'un piston sur lequel des aimants sont situés, le piston pouvant être déplacé par rapport à des bobines de sorte qu'un déplacement du piston et des aimants associés devant les bobines résulte en la génération d'électricité, ou pour commander la position occupée par un piston mobile pour amener deux surfaces se déplaçant de manière relative à se verrouiller l'une avec l'autre ou pour changer les forces de frottement entre les surfaces mobiles et ajuster ou commander de ce fait leurs vitesses relatives.
